# EUROPÄISCHE PATENTSCHRIFT

(11) **EP 0 600 432 B1**
(45) Veröffentlichungstag und Bekanntmachung des Hinweises auf die Patenterteilung: **08.05.1996**
(21) Anmeldenummer: 93119259.5
(22) Anmeldetag: 30.11.1993
(51) Int. Cl.: F16L 41/02

(54) **Rohr- oder Schlauchleitung zum Transport eines Fluids**
Pipeline or hose for the transport of fluid
Tuyauterie ou tuyauterie flexible pour le transport d'un fluide

(30) Priorität: 04.12.1992 DE 4240848
(43) Veröffentlichungstag der Anmeldung: 08.06.1994
(73) Patentinhaber: Aeroquip, Zweigniederlassung der Trinova GmbH, D-76532 Baden-Baden (DE)
(72) Erfinder: Merkel, Franz, D-76599 Weisenbach (DE); Schnurr, Wolfram, D-77889 Seebach (DE); Schmid, Dietmar, D-76593 Gernsbach (DE)
(74) Vertreter: Rehberg, Elmar, Dipl.-Ing.

(56) Entgegenhaltungen:
- DE-C- 3 721 501

## Beschreibung

Die Erfindung bezieht sich auf eine Rohr- oder Schlauchleitung zum Transport eines Fluids, die zumindest an einem Ende einen Ringstutzen mit Querbohrung aufweist, der für die Montage der Leitung an einem Aggregat dient und hierfür eine einen Kopf und einen Gewindeschaft aufweisende Hohlschraube sowie zwei Dichtringe aufnimmt. Unter einer Rohr- oder Schlauchleitung wird ein Stück Rohr oder Schlauch verstanden, welches mindestens an einem Ende, vorzugsweise jedoch an beiden Enden mit Anschlüssen versehen ist, um Aggregate miteinander zu verbinden. So kann beispielsweise mit einer solchen Leitung eine Pumpe mit einem Zylinder verbunden sein. Die Leitung kann auch sowohl ein Stück Schlauch wie ein Stück Rohr besitzen. Das Stück Rohr kann auch vergleichsweise kurz sein und lediglich aus einem Nippel bestehen. Unter einem Fluid wird ein flüssiges oder gasförmiges Medium verstanden, welches in der montierten Stellung durch die Leitung geschickt wird. Rohr- oder Schlauchleitungen der in Rede stehenden Art werden insbesondere im Automobilbau angewendet, z. B. an Servolenkeinrichtungen, Klimaanlagen, Kühlanlagen u. dgl.. Dabei müssen die einzelnen Aggregate über eine solche Leitung miteinander verbunden werden. Dabei werden Leitungen mit solchen Anschlüssen eingesetzt, die rechtwinklig aus dem Aggregat herausführen oder in dieses einmünden und die möglichst wenig ausladen, da im Automobilbau beengte Einbauverhältnisse auftreten. Besonders geeignet für diesen Zweck sind Leitungen mit solchen Anschlüssen, die einen Ringstutzen gemäß DIN 76 42, eine Hohlschraube gemäß DIN 76 43 sowie zugehörige Dichtringe aufweisen. Um eine solche Rohr- oder Schlauchleitung handelt es sich vorliegend.

Bisher bekannte Rohr- und Schlauchleitungen der eingangs beschriebenen Art weisen zumindest am einen Ende einen Ringstutzen mit Querbohrung auf. Der Ringstutzen ist mit dem Stück Rohrleitung verbunden, insbesondere verlötet, wobei der Innenraum des Rohres an den Innenraum des Ringstutzens mit der Querbohrung anschließt. Die Querbohrung durchsetzt den Ringstutzen etwa rechtwinklig zu dem Rohrstück und endet in Dichtflächen. Diese Dichtflächen werden beim Hersteller der Rohr- oder Schlauchleitung mit zwei Schutzdeckeln versehen, um eine Beschädigung der Dichtflächen während des Transportes zum Automobilwerk zu verhindern. Dem Automobilwerk werden die Rohr- oder Schlauchleitungen einerseits, die Hohlschrauben andererseits sowie die Dichtringe getrennt angeliefert. Zur Montage wird die Leitung ergriffen und die beiden Schutzdeckel von dem Ringstutzen entfernt. Weiterhin wird eine Hohlschraube ergriffen, auf diese ein Dichtring aufgefädelt und die Hohlschraube mit dem Dichtring durch die Querbohrung des Ringstutzens gesteckt. Anschließend wird ein zweiter Dichtring auf den Gewindeschaft der Hohlschraube aufgefädelt. Die so vormontierte Einheit wird an dem Rohr oder dem Schlauch der Leitung mit der einen Hand gehalten, während die andere Hand die Hohlschraube mit den beiden Dichtringen an dem Ringstutzen hält. Infolge der meist relativ weit ausladenden Leitungen und der beengten Einbauverhältnisse ist die nachfolgende Montage der Leitung von der Geschicklichkeit des Monteurs in hohem Maße abhängig. Hierzu muß zunächst die Achse der Hohlschraube fluchtend zur Achse des Einschraubstutzens an dem Aggregat ausgerichtet werden, und in dieser ausgerichteten Stellung muß die Hohlschraube von Hand gefühlvoll um ein oder zwei Gewindegänge eingeschraubt werden, bis die zugehörigen Gewinde greifen. Anschließend muß die Hohlschraube mit einem Schrauber - meist unter Aufbringung eines vorgegebenen Drehmomentes - so festgezogen werden, daß sich eine Fluid-dichte Verbindung ergibt. Bei dieser Montage besteht die Gefahr, daß die Hohlschraube gegenüber dem Ringstutzen zurücktritt, wobei die Hohlschraube und/oder zumindest die gewindeschaftseitige Dichtung zu Boden fallen können. Insbesondere wenn nur die Dichtung zu Boden fällt, bleibt dies in der Regel unbemerkt, und eine Fluid-dichte Verbindung ist dann nicht mehr erzielbar. Das Herabfallen der Hohlschraube endet häufig in einer Beschädigung des Gewindes am Gewindeschaft, so daß sich bei einem erneuten Einschraubversuch Schwierigkeiten ergeben. Die Aggregate, in deren Einlaßstutzen die Hohlschraube eingeschraubt wird, bestehen oft aus Aluminium, also einem relativ weichen Metall, so daß bei einem erneuten Einschraubversuch eine Schwergängigkeit auftreten kann, von der der Monteur nicht weiß, ob sie auf eine Beschädigung des Gewindes an der Hohlschraube oder auf nichtfluchtendes Eingreifen des Gewindes der Hohlschraube im Gewinde des Einlaßstutzens zurückzuführen ist. Er wird in der Regel ersteres annehmen und unter Zuhilfenahme des Schraubers die Hohlschraube zwangsweise einschrauben. Dies ist in dem weichen Material des Aggregates auch dann möglich, wenn die Achsen der Gewinde nicht miteinander fluchten. Eine Fluid-dichte Verbindung ist auf diesem Wege nicht zu erzielen. Vielmehr wird durch einen solchen zwangsweise durchgeführten Einschraubvorgang der Einschraubstutzen des Aggregates beschädigt, z. B. die Pumpe für die Servolenkung. Der somit entstehende Schaden ist beträchtlich. Die Pumpe muß am Ende des Bandes ausgebaut und durch eine neue Pumpe ersetzt werden, die Folgen des Druckmittelverlustes müssen ebenfalls beseitigt werden. In manchen Fällen läßt sich das Gehäuse der Pumpe nacharbeiten. Oft aber auch muß die gesamte Pumpe in einem neuen Gehäuse montiert werden. Das Herabfallen des gewindeschaftseitigen Dichtrings kommt insbesondere auch ohne Zurücktreten der Hohlschraube dann vor, wenn die Leitung in einer solchen Relativlage montiert werden muß, daß der Gewindeschaft der Hohlschraube dabei abwärts zeigt. In diesen Fällen wird oft der kleine Finger der einen Hand dazu benutzt, um das Herabfallen dieses Dichtrings zu verhindern. Mit dem Herabfallen der Hohlschraube und/oder der Dichtringe ist oft auch eine Verschmutzung verbunden. Dabei sind nicht nur die Dichtflächen betroffen, sondern auch die Innenräume der Leitung, die ja an sich durch die beiden Schutzdeckel möglichst geschützt werden sollen. Vor der Montage müssen diese Schutzdeckel zur Bildung der vormontierten Einheit abgezogen werden.

Weiterhin ist die Verwendung von Schutzkappen an Gewindeteilen bekannt. Solche Schutzkappen werden bei Innengewinden in den betreffenden Anschlußstutzen eingeschraubt oder eingepreßt. Bei Außengewinden werden die Schutzkappen auf den Gewindeteil aufgesteckt. Sie dienen dazu, einen Schutz während des Transportes des Gewindeteils herbeizuführen. Sie müssen vor jeder Montage des betreffenden Teils entfernt werden.

Der Erfindung liegt die Aufgabe zugrunde, eine Rohr- oder Schlauchleitung der eingangs beschriebenen Art so weiterzubilden, daß die Sicherheit ihrer Montage erheblich verbessert ist. Dabei geht es darum, zu ermöglichen, daß die Montage schneller und einfacher durchgeführt werden kann, mit hoher Sicherheit eine Fluid-dichte Verbindung entsteht und eine Beschädigung der Aggregate oder der Einzelteile vermieden wird.

Erfindungsgemäß wird dies bei der Rohr- oder Schlauchleitung der eingangs beschriebenen Art dadurch erreicht, daß eine Schutzkappe zum Zusammenhalt einer vormontierten Einheit aus Ringstutzen, Hohlschraube und den beiden Dichtringen vorgesehen ist, die etwa U-förmige Gestalt mit einem Bügel aufweist, an dessen einem Ende ein den Kopf der Hohlschraube hinterfassender Schenkel und an dessen anderem Ende ein Schutzdeckel für den Gewindeschaft der Kohlschraube vorgesehen ist, und daß die Schutzkappe an dem Bügel einen sich am Gewindeschaft der Hohlschraube abstützenden Fortsatz aufweist und der Schutzdeckel schwenkbar am Bügel gelagert ist.

Bei dieser neuen Leitung wird eine Schutzkappe für die vormontierte Einheit geschaffen und Schutzdeckel für den Ringstutzen vermieden. Der ein- oder beidhändig vorgesehene Anschluß wird beim Hersteller der Leitung vormontiert, indem dort der kopfseitige Dichtring auf die Hohlschraube aufgefädelt, die Hohlschraube durch die Querbohrung des Ringstutzens gesteckt, der gewindeschaftseitige Dichtring aufgesteckt und die neue Schutzkappe aufgesetzt wird. Dabei hält die Schutzkappe diese Teile nicht nur zusammen, sondern verschließt mit ihrem Schutzdeckel die gewindeschaftseitige Öffnung der Hohlschraube. Gleichzeitig wird das Gewinde der Hohlschraube geschützt, ebenso wie die Dichtflächen am Ringstutzen und den Dichtringen. Die vormontierte Einheit ist staubgeschützt und wird so dem Automobilwerk angeliefert. Zur Montage ergreift der Monteur eine solche Leitung und schwenkt den Schutzdeckel vom freien Ende der Hohlschraube ab, wobei jedoch die Schutzkappe weiterhin auf dem Anschluß verbleibt und dafür sorgt, daß die vormontierte Einheit nicht auseinanderfallen kann. Dieser Sitz der Schutzkappe an der vormontierten Einheit trotz abgeschwenktem Schutzdeckel wird durch den Fortsatz an dem Bügel erreicht, der sich an dem Gewindeschaft abstützt, also auch den gewindeschaftseitigen Dichtring übergreift und hält. Die Hohlschraube wird in dieser durch die Schutzkappe gehaltenen Stellung mit ihrer Achse fluchtend zur Achse des Einschraubstutzens an dem Aggregat ausgerichtet. Der Monteur ergreift mit der einen Hand den Kopf der Hohlschraube und ist sicher, daß er jetzt von Hand die Hohlschraube um ein oder zwei Gewindegänge einschrauben kann, ohne daß dabei die Gefahr besteht, daß die Hohlschraube, die Dichtringe oder die Schutzkappe herabfallen können. Nach diesem anfänglichen Einschrauben von Hand wird die Schutzkappe von dem Anschluß entfernt, was in der Regel durch Ergreifen des Schutzdeckels oder auch des Bügels erfolgen kann. Auch dabei können sich keine Einzelteile der vormontierten Einheit lösen, weil die Hohlschraube bereits in dem Gewinde des Einschraubstutzens gegriffen hat. Es kann nun gefahrlos ein Schrauber angesetzt werden, weil erst jetzt durch das Abnehmen der Schutzkappe der Kopf der Hohlschraube für das Ansetzen des Schraubers zugänglich geworden ist. Mit hoher Sicherheit wird eine ordnungsgemäße Fluid-dichte Verbindung erreicht.

Die neue Schutzkappe erbringt eine Reihe von Vorteilen. Es ergibt sich eine Verkürzung der Montagezeit am Band, da die vormontierte Einheit beim Hersteller der Leitung erstellt wird. Diese vormontierte Einheit ist während des Transportes wirksam geschützt, und zwar hinsichtlich ihrer sämtlichen Einzelteile. Ein Herabfallen der Dichtringe, unabhängig von der Einbaurichtung, ist nicht mehr möglich. Auch die Hohlschraube selbst kann nicht mehr während der Montage herabfallen, so daß auch eine Beschädigung ihres Gewindeschaftes vermieden wird. Die neue Schutzkappe erbringt auch einen Zwang zum feinfühligen Einschrauben von Hand und entlastet den Monteur, da dieser nicht mehr darauf achten muß, ob Dichtringe herabgefallen sind oder nicht. Eine Beschädigung des Gewindes am Einschraubstutzen am Aggregat wird mit Sicherheit vermieden. Die neue Schutzkappe ist wiederverwendbar oder in einfacher Weise recyclebar. Sie läßt sich unabhängig davon anwenden, aus welchem Material die Dichtringe bestehen, beispielsweise aus Kupfer, Kunststoff o. dgl.. Es gibt keine getrennte Lagerhaltung von Hohlschrauben, Dichtringen und Leitungsstücken am Band. Schließlich muß die Schutzkappe während der Montage auch abgezogen werden, damit der Kopf der Hohlschraube für den Schrauber zugänglich wird. Es wird also damit vermieden, daß die Schutzkappe zwangsweise mit festgeschraubt wird.

Der Fortsatz kann C-förmige Gestalt aufweisen und mit seinem Ende auf den Gewindeschaft aufschnappbar ausgebildet sein. Damit ist es möglich, die Dichtringe unter leichter Vorspannung auf den Dichtflächen des Ringstutzens zu halten und insoweit auch die Staubdichtheit dieser Verbindung während der Montage sicherzustellen. Die Kopfauflagefläche der Hohlschraube ist in diesen Schutz mit einbezogen. Diese Relativlage der Teile ist selbst dann noch gesichert, wenn der Schutzdeckel bereits abgeschwenkt ist. Andererseits gestattet der Fortsatz mit seiner C-förmigen Gestalt das einfache Abziehen vom Gewindeschaft der Hohlschraube vor dem Ansetzen des Schraubers.

Der Schutzdeckel kann einen den äußeren Umfang des freien Endes des Gewindeschafts abdeckenden Rand und einen oder mehrere in das freie Ende der Hohlschraube eingreifende Vorsprünge aufweisen. Der Rand erstreckt sich weiter nach außen als es dem Außendurchmesser des Gewindes entspricht, so daß der Gewindeschaft insbesondere an seinem freien Ende während des Transportes wirksam geschützt ist. Der Schutzdeckel legt sich dichtend auf das freie Ende der Hohlschraube auf und erbringt einen Staubschutz.

Dies wird insbesondere dann erreicht, wenn der den Kopf der Hohlschraube hinterfassende Schenkel und der Schutzdeckel und/oder der Fortsatz unter Vorspannung an der vormontierten Einheit ansetzbar sind. Damit unterbleiben auch Scheuerbewegungen der Teile aneinander während des Transportes.

Der den Kopf der Hohlschrauben hinterfassende Schenkel weist einen das Ergreifen des Kopfes der Hohlschraube gestattenden Umriß auf. Damit wird das Einschrauben der Kohlschraube von Hand trotz aufgesetzter Schutzkappe nicht behindert. Es genügt, wenn der Schenkel eine geringere Breite als die Schlüsselweite aufweist oder mit Einbuchtungen versehen ist o. dgl.. Die Breite des Schenkels kann etwa der Breite des Bügels der Schutzkappe entsprechen.

Andererseits besteht jedoch auch die Möglichkeit, den Fortsatz ringförmig auszubilden und mit einer Sollbruchstelle zu versehen, so daß die Schutzkappe nach dem feinfühligen Einschrauben der Hohlschraube unter Durchtrennung des ringförmigen Fortsatzes abgezogen werden kann.

In einer Weiterbildung der Erfindung kann der Fortsatz zugleich den gewindeschaftseitigen Dichtring der Einheit bilden und mit dem Bügel über eine Durchreißstelle in Verbindung stehen. Diese Möglichkeit ergibt sich dann, wenn Dichtringe aus Kunststoff Verwendung finden. Dabei ist es möglich, die Schutzkappe und den oder die Dichtringe einteilig zu spritzen und mit den Durchreißstellen zu versehen. Am Bügel kann somit ein weiterer zugleich den kopfseitigen Dichtring bildender Fortsatz vorgesehen sein, der mit dem Bügel ebenfalls über eine Durchreißstelle in Verbindung steht. Andererseits ist es aber auch möglich, Dichtringe aus Metall einzusetzen, die Schutzkappe aus Kunststoff zu spritzen und die beiden Dichtringe über Schnappverbindungselemente am Bügel der Schutzkappe zu lagern, so daß der gewindeschaftseitige Dichtring zugleich die Funktion des Fortsatzes am Bügel übernimmt.

Der Schutzdeckel kann als Griff für das vollständige Abziehen der Schutzkappe von der teilmontierten Einheit ausgebildet sein. Der Schutzdeckel kann auf seiner Oberseite und der Bügel auf seiner Außenseite druckknopfartig ausgebildet sein, um den Schutzdeckel in der abgeschwenkten Stellung zu fixieren, ohne daß die Schutzkappe von der vormontierten Einheit abgezogen wird. Andererseits läßt sich das Abziehen der Schutzkappe aber auch durch Ergreifen des den Kopf der Hohlschraube hinterfassenden Schenkels durchführen.

Die Erfindung wird anhand bevorzugter Ausführungsbeispiele weiter erläutert und beschrieben. Es zeigen:
- Figur 1: eine Schnittdarstellung der Rohr- oder Schlauchleitung mit aufgesetzter Schutzkappe im Bereich ihres einen Endes,
- Figur 2: eine Seitenansicht der Schutzkappe gemäß Figur 1,
- Figur 3: eine Draufsicht auf die Schutzkappe gemäß der Schnittangabe III-III in Figur 2,
- Figur 4: eine Draufsicht auf den Schutzdeckel der Schutzkappe gemäß der Schnittangabe IV-IV in Figur 2,
- Figur 5: eine ähnliche Darstellung wie Figur 3, jedoch bei einer anderen Ausführungsform,
- Figur 6: eine ähnliche Darstellung wie Figur 1, jedoch bei einer anderen Ausführungsform und
- Figur 7: eine Seitenansicht auf die Schutzkappe in einer weiteren Ausführungsform.

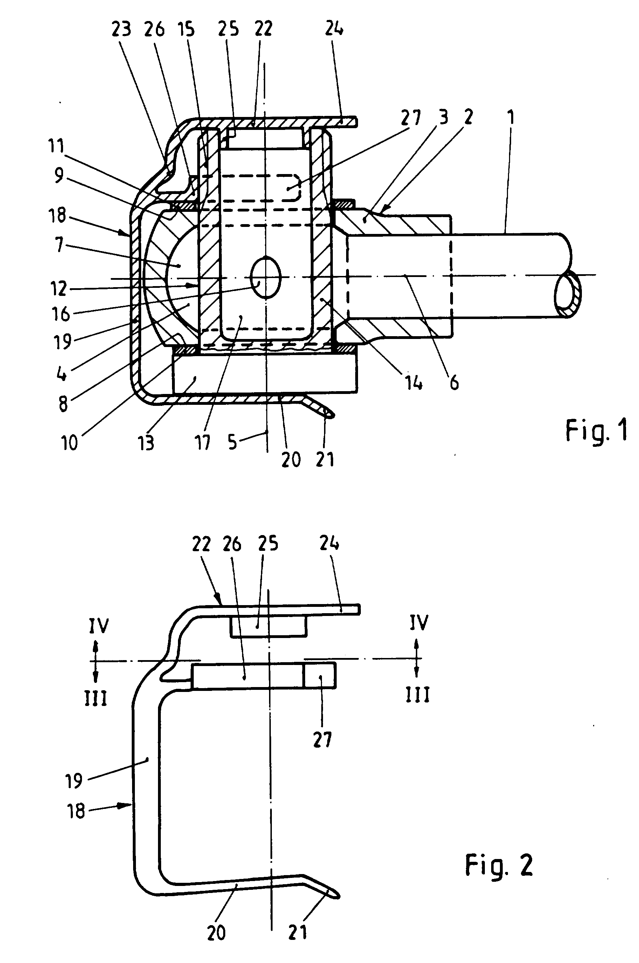

Gemäß dem Ausführungsbeispiel nach Figur 1 ist das Ende eines Rohres 1 in einen Ringstutzen 2 eingelötet, der zu diesem Zweck einen entsprechenden Anschlußstutzen 3 aufweist. Der Ringstutzen 2 besitzt eine Querbohrung 4, deren Achse 5 sich senkrecht zu einer Achse 6 des Anschlußstutzens 3 bzw. des Rohres 1 erstreckt. Die Querbohrung 4 verbreitert sich im Inneren des Ringstutzens 2 zu einem Innenraum 7, der somit mit dem Innenraum des Rohres 1 in dauernder Verbindung steht. Der Ringstutzen 2 weist zueinander parallele Dichtflächen 8 und 9 auf, an denen je ein Dichtring 10 und 11 anliegen.

Eine Hohlschraube 12 besitzt einen Kopf 13, an den sich ein Hohlschaft 14 anschließt, der in einen Gewindeschaft 15 übergeht. Der Hohlschaft 14 ist in der Regel mit drei Durchbrechungen 16 versehen, über die der Innenraum 7 des Ringstutzens 2 in dauernder Verbindung mit einem Innenraum 17 der Hohlschraube 12 steht. Die Hohlschraube 12 ist mit den beiden Dichtringen 10 und 11 in der gezeigten Weise montiert und bildet eine vormontierte Einheit, die durch eine Schutzkappe 18, die als Kunststoffspritzteil ausgebildet sein kann, gehalten wird. Die Schutzkappe 18 besitzt etwa U-förmigen Querschnitt bzw. Gestalt und weist einen Bügel 19 auf, der sich etwa parallel zu der Achse 5 erstreckt, aber in seinem oberen Bereich auch abgeknickt sein kann. Die Schutzkappe 18 weist am einen Ende des Bügels 19 etwa rechtwinklig zu diesem einen Schenkel 20 auf, der den Kopf 13 der Hohlschraube 12 hintergreift. Am freien Ende des Schenkels 20 kann ein abgewinkelter Vorsprung 21 vorgesehen sein, um das Aufschieben des Schenkels 20 am Kopf 13 zu erleichtern. Am anderen Ende des Bügels 19 ist ein Schutzdeckel 22 vorgesehen, der über eine Einwölbung 23 oder eine Materialschwächung gegenüber dem Bügel 19 abschwenkbar gelagert ist. Der Schutzdeckel 22 besitzt einen Rand 24, mit dem er radial über den Gewindeschaft 15 vorsteht und damit insbesondere das freie Ende des Gewindeschaftes 15 vor Beschädigung schützt. Auf seiner Innenseite besitzt der Schutzdeckel 22 einen oder mehrere Vorsprünge 25, mit denen er in den Innenraum 17 des Gewindeschaftes 15 eingreift und dort gehalten ist. Der Schutzdeckel 22 verschließt die Innenräume 17 und 7 staubdicht und schützt den Gewindeschaft 15. Auf der Innenseite des Bügels 19 ist ein Fortsatz 26 vorgesehen, der etwa C-förmige Gestalt besitzt und sich mit seinen freien Enden 27 über den halben Umfang des Gewindeschaftes 15 der Hohlschraube 12 hinübererstreckt. Dieser Fortsatz 26 ist unter einer Art Schnappwirkung auf den Gewindeschaft 15 der Hohlschraube aufgesetzt, wobei er den Dichtring 11 übergreift und in Verbindung mit dem Schenkel 20 die Teile unter Vorspannung aneinander zur Anlage hält. Die Schutzkappe 18 insgesamt schützt die Dichtflächen 8 und 9 und die Dichtringe 10 und 11 sowie die Hohlschraube 12 und den Ringstutzen 2. Die Rohr- oder Schlauchleitung wird so, wie dies Figur 1 zeigt, vom Hersteller als vormontierte und geschützte Einheit dem Automobilwerk angeliefert. Durch die unter Vorspannung auf die Teile aufgesetzte Schutzkappe 18 wird einerseits die erforderliche Staubdichtheit ermöglicht und andererseits das Scheuern der Teile während des Transportes verhindert. Bei der Montage wird die Rohr- oder Schlauchleitung ergriffen und der Schutzdeckel 22 abgeschwenkt, so daß der Gewindeschaft 15 freikommt. Dabei verbleibt jedoch die Schutzkappe 18 mit ihrem Bügel 19, dem Schenkel 20 und dem Fortsatz 26 in ihrer in Figur 1 dargestellten Relativlage. Der Monteur kann nun in einfacher Weise die Achse 5 der Hohlschraube 12 zu der Achse des Gewindes am Eingangsanschluß des Aggregates ausrichten und in der ausgerichteten Stellung den Kopf 13 der Hohlschraube 12 mit den Fingern ergreifen und die Hohlschraube 12 um einen oder mehrere Gewindegänge leicht und feinfühlig einschrauben. Dabei besteht keinerlei Gefahr, daß die Hohlschraube 12 und/oder die Dichtringe 10 und 11 herabfallen könnten, weil sie von der Schutzkappe 18 auch weiterhin gehalten sind. Erst wenn der Gewindeschaft 15 gegriffen hat, wird die Schutzkappe 18 ganz abgezogen. Hierbei läßt sie sich entweder an dem abgeschwenkten Schutzdeckel 22 oder an dem Bügel 19 oder auch an dem Schenkel 20 handhaben. Sobald die Schutzkappe 18 entfernt ist, ist auch der Kopf 13 der Hohlschraube 12 freigekommen, so daß nunmehr ein Schrauber ansetzbar ist, mit welchem die Hohlschraube 12 mit dem vorgesehenen Drehmoment angezogen und damit verläßlich die Fluid-dichte Verbindung erreicht wird. Es versteht sich, daß der Anschluß am einen Ende des Rohres 1 auch am anderen Ende des Rohres 1 vorgesehen sein kann, wobei dann dort entsprechend zu verfahren ist. Die Rohr- oder Schlauchleitung kann aber auch sowohl ein Rohr 1 wie auch einen Schlauch oder auch nur einen Schlauch o. dgl. aufweisen.

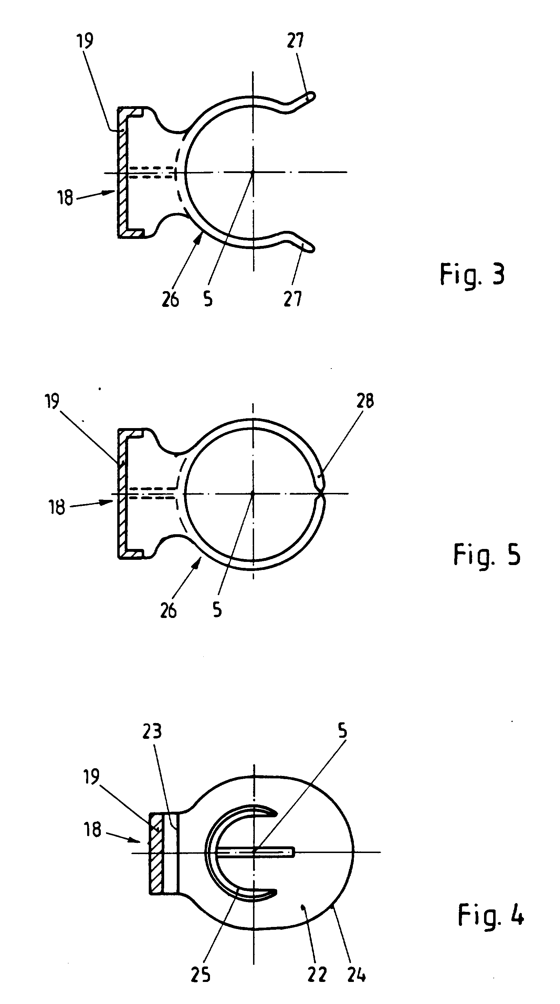

Figur 2 zeigt noch einmal die Schutzkappe 18 in Seitenansicht mit ihren Einzelteilen. Aus Figur 3 ist insbesondere die C-förmige Gestalt des Fortsatzes 26 ersichtlich. Auch die Breite des Bügels 18 relativ zum Außendurchmesser der Hohlschraube 12 ist erkennbar. Figur 4 zeigt eine Ansicht auf die Innenseite des Schutzdeckels 22 mit dem Vorsprung 25. Der Vorsprung 25 ist hier asymmetrisch ausgebildet, um das Aufdrücken des Schutzdeckels 22 entgegen der Vorspannung der Schutzkappe 18 auf den Gewindeschaft 15 zu erleichtern.

Figur 5 zeigt eine Ausführungsform, bei der der Fortsatz 26 nicht in C-förmiger Gestalt vorgesehen ist. Der Fortsatz 26 ist hier ringförmig geschlossen ausgebildet und besitzt eine Sollbruchstelle 28, die beim Abnehmen der Schutzkappe 18 durchgerissen wird.

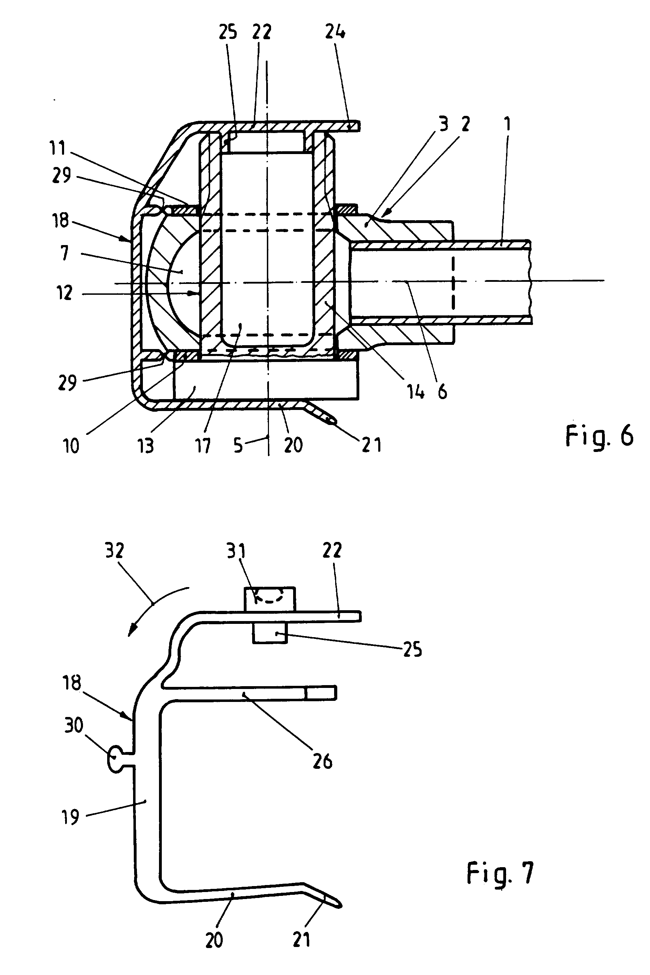

Figur 6 zeigt eine ähnliche Darstellung wie Figur 1, jedoch bei einer anderen Ausführungsform. Die Dichtringe 10 und 11 sind hier einteilig mit der Schutzkappe 18 gespritzt und über Durchreißstellen 29 vorgesehen. Der Fortsatz 26 kommt als gesondertes Teil in Fortfall. Seine Funktion wird von dem Dichtring 11 übernommen. Wenn Dichtringe 10 und 11 aus Metall verwendet werden sollen, können diese, ähnlich wie in Figur 6 dargestellt, in nicht gezeigte Schnappverbindungselemente eingefügt werden, die etwa dort vorgesehen sind, wo die Durchreißstellen 29 verdeutlicht sind.

Figur 7 zeigt die Schutzkappe 18 mit Schnappverbindungselementen 30, 31 auf der Außenseite des Bügels 19 und auf der Außenseite des Schutzdeckels 22, mit deren Hilfe der Schutzdeckel 22 in der abgeschwenkten Stellung gemäß Pfeil 32 fixiert wird.

### BEZUGSZEICHENLISTE

- 1 -: Rohr
- 2 -: Ringstutzen
- 3 -: Anschlußstutzen
- 4 -: Querbohrung
- 5 -: Achse
- 6 -: Achse
- 7 -: Innenraum
- 8 -: Dichtfläche
- 9 -: Dichtfläche
- 10 -: Dichtring
- 11 -: Dichtring
- 12 -: Hohlschraube
- 13 -: Kopf
- 14 -: Hohlschaft
- 15 -: Gewindeschaft
- 16 -: Durchbrechung
- 17 -: Innenraum
- 18 -: Schutzkappe
- 19 -: Bügel
- 20 -: Schenkel
- 21 -: Vorsprung
- 22 -: Schutzdeckel
- 23 -: Einwölbung
- 24 -: Rand
- 25 -: Vorsprung
- 26 -: Fortsatz
- 27 -: Ende
- 28 -: Sollbruchstelle
- 29 -: Durchreißstelle
- 30 -: Schnappverbindungselement
- 31 -: Schnappverbindungselement
- 32 -: Pfeil

## Patentansprüche

1. Rohr- oder Schlauchleitung zum Transport eines Fluids, die zumindest an einem Ende einen Ringstutzen (2) mit Querbohrung (4) aufweist, der für die Montage der Leitung an einem Aggregat dient und hierfür eine einen Kopf (13) und einen Gewindeschaft (15) aufweisende Hohlschraube (12) sowie zwei Dichtringe (10, 11) aufnimmt, dadurch gekennzeichnet, daß eine Schutzkappe (18) zum Zusammenhalt einer vormontierten Einheit aus Ringstutzen (2), Hohlschraube (12) und den beiden Dichtringen (10, 11) vorgesehen ist, die etwa U-förmige Gestalt mit einem Bügel (19) aufweist, an dessen einem Ende ein den Kopf (13) der Hohlschraube (12) hinterfassender Schenkel (20) und an dessen anderem Ende ein Schutzdeckel (22) für den Gewindeschaft (15) der Hohlschraube (12) vorgesehen ist, und daß die Schutzkappe (18) an dem Bügel (19) einen sich am Gewindeschaft (15) der Hohlschraube (12) abstützenden Fortsatz (26) aufweist und der Schutzdeckel (22) schwenkbar am Bügel (19) gelagert ist.

2. Leitung nach Anspruch 1, dadurch gekennzeichnet, daß der Fortsatz (26) C-förmige Gestalt aufweist und mit seinem Ende auf den Gewindeschaft (15) aufschnappbar ausgebildet ist.

3. Leitung nach Anspruch 1, dadurch gekennzeichnet, daß der Schutzdeckel (22) einen den äußeren Umfang des freien Endes des Gewindeschafts (15) abdeckenden Rand (24) und einen oder mehrere in das freie Ende der Hohlschraube (12) eingreifende Vorsprünge (25) aufweist.

4. Leitung nach Anspruch 1, dadurch gekennzeichnet, daß der den Kopf (13) der Hohlschraube (12) hinterfassende Schenkel (20) und der Schutzdeckel (22) und/oder der Fortsatz (26) unter Vorspannung an der vormontierten Einheit ansetzbar sind.

5. Leitung nach Anspruch 1 oder 4, dadurch gekennzeichnet, daß der den Kopf (13) der Hohlschraube (12) hinterfassende Schenkel (20) einen das Ergreifen des Kopfes (13) der Hohlschraube (12) gestattenden Umriß aufweist.

6. Leitung nach Anspruch 1, dadurch gekennzeichnet, daß der Fortsatz (26) ringförmig ausgebildet und mit einer Sollbruchstelle (28) versehen ist.

7. Leitung nach Anspruch 1, dadurch gekennzeichnet, daß der Fortsatz (26) zugleich den gewindeschaftseitigen Dichtring (11) der Einheit bildet und mit dem Bügel (19) über eine Durchreißstelle (29) in Verbindung steht.

8. Leitung nach Anspruch 1 oder 7, dadurch gekennzeichnet, daß am Bügel (19) ein weiterer zugleich den kopfseitigen Dichtring (10) bildender Fortsatz (26) vorgesehen ist, der mit dem Bügel (19) über eine Durchreißstelle (29) in Verbindung steht.

9. Leitung nach Anspruch 1, dadurch gekennzeichnet, daß einer oder beide Dichtringe (10, 11) durch Schnappverbindungselemente am Bügel (19) gehalten sind.

10. Leitung nach Anspruch 1, dadurch gekennzeichnet, daß der Schutzdeckel (22) als Griff für das vollständige Abziehen der Schutzkappe (18) von der teilmontierten Einheit ausgebildet ist.

## Claims

1. Rigid line or hose pipe for transportation of a fluid, which shows at least at one ending a ring type nipple (2) with a cross hole (4), which serves for the installation of the line or pipe at a unit and therefore takes a banjo bolt (12) with a head (13) and a shank with a screw thread (15) and two sealing rings (10, 11), **wherein** a protecting cap (18) holds a pre-arranged unit of ring type nipples (2), banjo bolt (12) and the two sealing rings (10, 11) together, that is about U-formed with a bow (19), at the ending of which a leg (20) is provided that goes behind of the head (13) of the banjo bolt (12) and at the other ending of which a protecting cover (22) for the shank with a screw thread (15) of the banjo bolt (12) is provided, and whereby the protecting cap (18) at the bow (19) shows an extension (26) which is supported by the shank with a screw thread (15) of the banjo bolt (12) and whereby the protecting cover (22) is positioned removable at the bow (19).

2. Line or pipe according to claim 1, **wherein** the extension (26) is C-formed and is formed snappable with its ending on the shank will a screw thread (15).

3. Line or pipe according to claim 1, **wherein** the protecting cover (22) has an edge (24) that covers the outer circumference of the free ending of the shank with a screw thread (15) and has one or more projecting parts (25) which take hold in the free ending of the banjo bolt (12).

4. Line or pipe according to claim 1, **wherein** the leg (20) that goes behind of the head (13) of the banjo bolt (12) and the protective cover (22) and/or the extension (26) under initial tension can be added to the pre-arranged unit.

5. Line or pipe according to claim 1 or 4, **wherein** the leg (20) that goes behind of the head (13) of the banjo bolt (12) shows a shape that enables gripping the head (13) of the banjo bolt (12).

6. Line or pipe according to claim 1, **wherein** the extension (26) is formed like a ring and has a provided break-through (28).

7. Line or pipe according to claim 1, **wherein** the extension (26) equally forms the screw thread sided sealing ring (11) of the unit and is connected by a provided break-through (29) with the bow (19).

8. Line or pipe according to claim 1 or 7, **wherein** at the bow (19) another extension (26) is provided which equally formes the head sided sealing ring (10) that is connected with the bow (19) by a provided break-through.

9. Line or pipe according to claim 1, **wherein** one or both sealing rings (10, 11) are held on the bow (19) by a snap connection element.

10. Line or pipe according to claim 1, **wherein** the protecting cover (22) is formed as a handle to totally remove the protecting cap (18) from the partially installed unit.

## Revendications

1. Tuyauterie ou tuyauterie flexible pour le transport d'un fluide, qui comporte au moins à une extrémité une tubulure annulaire (2) avec perçage transversal (4), qui sert au montage de la conduite sur un ensemble et qui loge à cet effet une vis creuse (12), comportant une tête (13) et une tige filetée (15), ainsi que deux bagues d'étanchéité (10, 11), caractérisée en ce qu'il est prévu un capuchon de protection (18) pour le maintien d'une unité prémontée (7) composée de la tubulure annulaire (2), de la vis creuse (12) et des deux bagues d'étanchéité (10, 11), qui présente à peu près la forme d'un U avec un étrier (19), à une extrémité duquel est prévue une branche (20) passant derrière la tête (13) de la vis creuse (12) et à son autre extrémité, un couvercle de protection (22) pour la tige filetée (15) de la vis creuse (12), et en ce que le capuchon de protection (18) présente sur l'étrier (19), un prolongement (26) prenant appui contre la tige filetée (15) de la vis creuse (12) et le couvercle de protection (22) est monté pivotant sur l'étrier (19).

2. Tuyauterie selon la revendication 1, caractérisée en ce que le prolongement (26) présente la forme d'un C et peut se clipser avec son extrémité sur la tige filetée (15).

3. Tuyauterie selon la revendication 1, caractérisée en ce que le couvercle de protection (22) présente un bord (24) recouvrant le pourtour extérieur de l'extrémité libre de la tige filetée (15) et une ou plusieurs saillies (25) s'engageant dans l'extrémité libre de la vis creuse (12).

4. Tuyauterie selon la revendication 1, caractérisée en ce que la branche (20), passant derrière la tête (13) de la vis creuse (12), et le couvercle de protection (22) et/ou le prolongement (26) peuvent s'appliquer sous précontrainte contre l'unité prémontée.

5. Tuyauterie selon la revendication 1 ou 4, caractérisée en ce que la branche (20) passant derrière la tête (13) de la vis creuse (12), présente un contour permettant de saisir la tête (13) de la vis creuse (12).

6. Tuyauterie selon la revendication 1, caractérisée en ce que le prolongement (26) est annulaire et est pourvu d'un point de rupture (28).

7. Tuyauterie selon la revendication 1, caractérisée en ce que le prolongement (26) forme en même temps la bague d'étanchéité (11) côté tige filetée de l'unité et est en liaison avec l'étrier (19), par un point d'arrachage (29).

8. Tuyauterie selon la revendication 1 ou 7, caractérisée en ce que sur l'étrier (19) est prévu un autre prolongement (26) formant en même temps la bague d'étanchéité (10) côté tête, lequel est en liaison avec l'étrier (19), par un point d'arrachage (29).

9. Tuyauterie selon la revendication 1, caractérisée en ce que l'une ou les deux bagues d'étanchéité (10, 11) sont maintenues sur l'étrier (19), par des éléments de liaison à encliquetage.

10. Tuyauterie selon la revendi.cation 1, caractérisée en ce que le couvercle de protection (22) est configuré en poignée pour l'extraction complète du capuchon de protection (18) de l'unité partiellement montée.
